(19) **Europäisches Patentamt / European Patent Office / Office européen des brevets**

(11) **EP 3 759 787 B1**

(12) **EUROPÄISCHE PATENTSCHRIFT**

(45) Veröffentlichungstag und Bekanntmachung des Hinweises auf die Patenterteilung:
**18.05.2022   Patentblatt 2022/20**

(21) Anmeldenummer: **19710619.8**

(22) Anmeldetag: **28.02.2019**

(51) Internationale Patentklassifikation (IPC):
***H02J 7/00*** *(2006.01)*

(52) Gemeinsame Patentklassifikation (CPC):
**H02J 7/0019;** Y02T 10/70

(86) Internationale Anmeldenummer:
**PCT/EP2019/055073**

(87) Internationale Veröffentlichungsnummer:
**WO 2019/166592 (06.09.2019 Gazette 2019/36)**

(54) **LADE-SYSTEM**

CHARGING SYSTEM

SYSTÈME DE CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2018   DE 102018203192**

(43) Veröffentlichungstag der Anmeldung:
**06.01.2021   Patentblatt 2021/01**

(73) Patentinhaber: **Bucher Hydraulics AG**
**6345 Neuheim (CH)**

(72) Erfinder:
• **LÄNG, Bernhard**
**8590 Romanshorn (CH)**

• **ITTEN, Alex**
**8590 Romanshorn (CH)**
• **FÄSSLER, Benjamin**
**9104 Waldstatt (CH)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
**DE-A1-102016 209 905**

**Beschreibung**

Die Erfindung betrifft ein Lade-System.

Die DE 10 2016 209 905 A1 offenbart ein Fahrzeugbordnetz mit einem Wechselrichter, einem elektrischen Energiespeicher, einer elektrischen Maschine und einem Gleichstrom-Übertragungsanschluss. Der Wechselrichter ist über Eingangsstromanschlüsse mit dem Energiespeicher verbunden. Drei Phasenstromanschlüsse des Wechselrichters sind mit der elektrischen Maschine verbunden. Der Wechselrichter weist drei Brücken auf. Die beiden Eingangsstromanschlüsse sind über die Brücken mit den drei Phasenstromanschlüssen verbunden. Der Gleichstrom-Übertragungsanschluss weist eine positive Schiene auf, die über die elektrische Maschine mit den Phasenstromanschlüssen verbunden ist. Weiter sind X- und Y-Kondensatoren vorgesehen.

Der Erfindung liegt die Aufgabe zugrunde, ein Lade-System zur Verfügung zu stellen, mittels dem unterschiedliche Arten von elektrischen Energiespeichern möglichst flexibel aufgeladen werden können.

Die Erfindung löst diese Aufgabe durch ein Lade-System nach Anspruch 1.

Das Lade-System weist eine ganzzahlige Anzahl m von Anschlüssen zum Anschließen mindestens eines zu ladenden elektrischen Bezugs-Energiespeichers auf, der zum Laden beispielsweise elektrische Energie aus einem elektrischen Speise-Energiespeicher beziehen kann. Die Anzahl m kann beispielsweise zwischen 2 und 20 liegen. Der Bezugs-Energiespeicher kann Bestandteil eines so genannten (Isolé Terre)IT-Systems sein. Ein einzelner Anschluss kann hierbei ein einzelner elektrischer Pol sein. Drei derartige Anschlüsse bzw. Pole können beispielsweise im Verbund einen dreiphasigen Anschluss bzw. Drehstromanschluss bilden. Zusätzlich zu den drei Anschlüssen können beispielsweise weiter ein Nullleiter-Anschluss und ein PE-Anschluss Bestandteil eines derartigen Drehstromanschlusses sein, wobei der Nullleiter-Anschluss und der PE-Anschluss getrennt von den anderen Anschlüssen ausgeführt sein können.

Das Lade-System weist weiter eine Anzahl n von mindestens drei zwei-level oder mehr-level Wechselrichter-Brücken auf, d.h. n ≥ 3. Bevorzugt weist das Lade-System eine Anzahl n von mindestens sechs zwei-level oder mehr-level Wechselrichter-Brücken auf, d.h. n ≥ 6. Die Wechselrichter-Brücken weisen jeweils herkömmlich einen Mittenabgriff auf. Die Wechselrichter-Brücken können weiter herkömmlich mindestens zwei in Reihe geschaltete, ansteuerbare Schaltmittel aufweisen, wobei der jeweilige Mittenabgriff in Abhängigkeit von einem Schaltzustand der Schaltmittel entweder mit dem einen oder dem anderen äußeren Ende einer jeweiligen Wechselrichterbrücke elektrisch verbunden ist. Insoweit sei auch auf die einschlägige Fachliteratur zu Wechselrichtern und deren Wechselrichter-Brücken verwiesen.

Das Lade-System weist weiter eine Anzahl n von elektrischen ein- oder mehrphasigen Filtern auf, wobei ein Eingang eines jeweiligen Filters der Anzahl n von Filtern mit einem jeweils zugehörigen Mittenabgriff einer zugehörigen Wechselrichter-Brücke der Anzahl von Wechselrichter-Brücken elektrisch verbunden ist.

Das Lade-System weist weiter eine steuerbare Zuordnungseinheit oder Schaltmatrix auf, die zwischen einen jeweiligen Ausgang eines Filters der Anzahl n von Filtern und die Anzahl m von Anschlüssen eingeschleift ist und die dazu ausgebildet ist, in Abhängigkeit von mindestens einem Ansteuersignal, d.h. einem oder mehreren Ansteuersignalen, einen jeweiligen Ausgang eines Filters der Anzahl n von Filtern einem jeweils zugehörigen Anschluss der Anzahl m von Anschlüssen elektrisch zuzuordnen bzw. einen jeweiligen Ausgang eines Filters der Anzahl n von Filtern mit einem jeweils zugehörigen Anschluss der Anzahl m von Anschlüssen elektrisch zu verbinden. Bei dieser Zuordnung kann genau ein Anschluss der Anzahl m von Anschlüssen genau einem zugehörigen Ausgang eines Filters zugeordnet sein. Bei dieser Zuordnung kann auch ein Anschluss der Anzahl m von Anschlüssen mehreren zugehörigen Ausgängen mehrerer Filter zugeordnet sein, d.h. mehrere Filterausgänge können demselben Anschluss zugeordnet sein bzw. mit demselben Anschluss elektrisch verbunden sein.

Die Begriffe Eingang und Ausgang eines jeweiligen Filters werden hierbei nur zur Unterscheidung unterschiedlicher Anschlüsse der Filter verwendet. Ein Signalfluss und/oder Energiefluss kann sowohl vom Eingang des jeweiligen Filters Richtung Ausgang des jeweiligen Filters erfolgen als auch vom Ausgang des jeweiligen Filters in Richtung Eingang des jeweiligen Filters erfolgen.

Das Lade-System weist weiter eine Steuereinheit auf, beispielsweise in Form eines Mikroprozessors, die dazu ausgebildet ist, das oder die Ansteuersignale in Abhängigkeit von einem gewünschten Lademodus des Lade-Systems zu erzeugen. Die Funktion der Steuereinheit kann beispielsweise auf eine oder mehrere Steuereinheiten aufgeteilt sein.

Gemäß einer Ausführungsform weist das Lade-System einen oder mehrere elektrische Speise-Energiespeicher auf. Der oder die Speise-Energiespeicher können beispielsweise in Form von wieder aufladbaren elektrochemischen Energiespeichern bzw. Batterien verkörpert sein.

Die Wechselrichter-Brücken sind für diesen Fall jeweils aus dem Speise-Energiespeicher gespeist, d.h. können beispielsweise an ihren äußeren Enden mit einer Spannung beaufschlagt sein, die aus elektrischer Energie des Speise-Energiespeichers erzeugt wird bzw. die eine Spannung ist, die der elektrische Energiespeicher ausgibt bzw. liefert. Die speisende Spannung kann auch als Zwischenkreisspannung bezeichnet werden. Eines der äußeren Enden einer jeweiligen Wechselrichterbrücke kann beispielsweise mit einem positiven Zwischenkreispotential beaufschlagt sein und das andere der äußeren Enden einer jeweiligen Wechselrichterbrücke kann beispielsweise mit einem negativen Zwischenkreispotential beaufschlagt sein, wobei die Potentialdifferenz zwischen positivem Zwischenkreispotential und negativem Zwischenkreispotential die Zwischenkreisspannung bildet, die der vom elektrischen Energiespeicher ausgegebenen Spannung entspricht.

Zusätzlich oder alternativ zu dem Speise-Energiespeicher kann eine Speise-Spannung und/oder ein Speise-Strom für die Wechselrichterbrücken auch mittels eines elektrischen Generators erzeugt werden, der beispielsweise mittels eines Verbrennungsmotors angetrieben wird.

Gemäß einer Ausführungsform weist ein jeweiliges Filter der Anzahl n von Filtern mindestens eine Drossel und mindestens einen Kondensator auf. Die Filter bzw. die Drossel(n) und der oder die Kondensatoren können beispielsweise in einer L-, T oder PI-Topologie verschaltet sein.

Erfindungsgemäss wird der gewünschte Lademodus aus folgender Menge von Lademodi ausgewählt:

a) gleichzeitiges Laden von mehreren elektrischen Bezugs-Energiespeichern mit Wechselstrom (beispielsweise einphasig oder dreiphasig),
b) Laden mindestens eines Bezugs-Energiespeichers mit Wechselstrom (beispielsweise einphasig oder dreiphasig), wobei ein Ladestrom im Lademodus b) höher ist als ein Ladestrom im Lademodus a),
c) gleichzeitiges Laden von mehreren elektrischen Bezugs-Energiespeichern mit Gleichstrom,
d) Laden mindestens eines elektrischen Bezugs-Energiespeichers mit Gleichstrom, wobei ein Ladestrom im Lademodus d) höher ist als ein Ladestrom im Lademodus c).

Gemäß einer Ausführungsform ist die Steuereinheit dazu ausgebildet, das mindestens eine Ansteuersignal für die steuerbare Zuordnungseinheit und weitere Ansteuersignale für Schaltmittel der Wechselrichterbrücken derart zu erzeugen, dass der Speise-Energiespeicher mittels elektrischer Energie, die an einem oder mehreren Anschlüssen der Anzahl m von Anschlüssen zur Verfügung gestellt ist, geladen wird.

Gemäß einer Ausführungsform ist die Steuereinheit dazu ausgebildet, das mindestens eine Ansteuersignal für die steuerbare Zuordnungseinheit und weitere Ansteuersignale für Schaltmittel der Wechselrichterbrücken derart zu erzeugen, dass im Speise-Energiespeicher gespeicherte elektrische Energie in ein elektrisches Versorgungsnetz, das an einem Anschluss oder mehreren Anschlüssen der Anzahl m von Anschlüssen angeschlossen ist, eingespeist wird. Das elektrische Versorgungsnetz kann beispielsweise ein herkömmliches einphasiges oder dreiphasiges Wechselspannungsnetz sein.

Gemäß einer Ausführungsform liefert der Speise-Energiespeicher eine Spannung mit einem Pegel, der größer als ein Pegel einer Spannung ist, die ein Lade-Energiespeicher typisch ausgibt. Beispielsweise kann ein typischer Pegel, den der Speise-Energiespeicher liefert, größer als 600 V sein, insbesondere größer als 750 V sein, insbesondere größer oder gleich 800 V sein. Der Pegel, den der Speise-Energiespeicher liefert, kann größer als das $\sqrt{2}$ -fache eines Effektivwerts einer Wechsel-Spannung eines elektrischen Versorgungsnetzes sein, das an einem Anschluss oder mehreren Anschlüssen der Anzahl m von Anschlüssen angeschlossen ist.

Aufgrund dessen, dass jeder Wechselrichter prinzipiell als Tiefsetzsteller wirken kann, können aus der mittels des Speise-Energiespeichers zur Verfügung gestellten Spannung (nachfolgend als Batteriespannung bezeichnet) beliebige Spannungen erzeugt werden, die tiefer als die Batteriespannung sind. Beim Laden des Speise-Energiespeichers wiederum kann eine Wechselrichter-Brücke als Hochsetzsteller wirken, indem beispielsweise elektrische Energie aus einem spannungsmäßig tiefer gelegenen 400 V oder 480 V Netz in eine höhere Batteriespannung gewandelt wird.

Gemäß einer Ausführungsform weist die ansteuerbare Zuordnungseinheit eine Anzahl von ansteuerbaren Schaltmitteln auf. Die Anzahl von ansteuerbaren Schaltmitteln kann von der Anzahl n und der Anzahl m abhängigen. In einer maximalen Ausbaustufe mit einer maximalen Anzahl von Zuordnungsfreiheitsgraden kann eine n x m Schaltmatrix realisiert werden, in der jeder Ausgang eines Filters auf jeden beliebigen Ausgang des Lade-Systems geschaltet werden kann. Um die Anzahl von ansteuerbaren Schaltmitteln zu reduzieren, können die Zuordnungsfreiheitsgrade reduziert werden.

Gemäß einer Ausführungsform sind die ansteuerbaren Schaltmitteln Schütze.

Die Erfindung wird nachfolgend detailliert unter Bezugnahme auf die Zeichnungen beschrieben. Hierbei zeigt:

Fig. 1     ein Blockschaltbild eines prinzipiellen Aufbaus eines erfindungsgemäßen Lade-Systems,

Fig. 2     eine Anzahl von Wechselrichterbrücken des in Fig. 1 gezeigten Lade-Systems gemäß einer ersten Ausführungsform,

Fig. 3     eine Anzahl von Wechselrichterbrücken des in Fig. 1 gezeigten Lade-Systems gemäß einer weiteren Ausführungsform,

Fig. 4     eine Anzahl von elektrischen Filtern des in Fig. 1 gezeigten Lade-Systems,

Fig. 5     eine steuerbare Zuordnungseinheit des in Fig. 1 gezeigten Lade-Systems gemäß einer ersten Ausführungsform,

Fig. 6     eine steuerbare Zuordnungseinheit des in Fig. 1 gezeigten Lade-Systems gemäß einer weiteren Ausführungsform,

Fig. 7    das Lade-System in einem ersten Lademodus,

Fig. 8    das Lade-System in einem zweiten Lademodus und

Fig. 9    das Lade-System in einem dritten Lademodus.

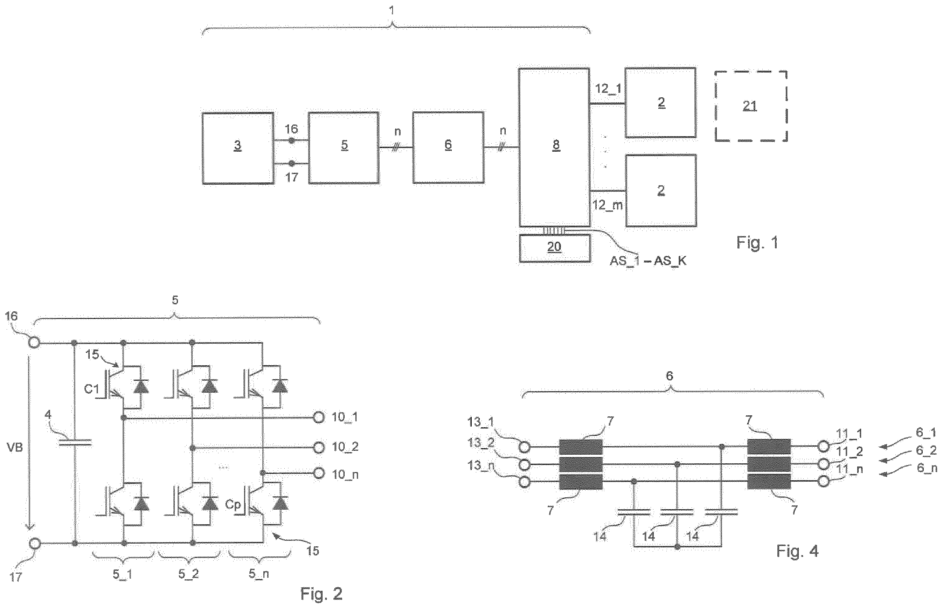

Fig. 1 zeigt ein Blockschaltbild eines prinzipiellen Aufbaus eines erfindungsgemäßen Lade-Systems 1. Das Lade-System 1 kann ein mobiles Lade-System sein, das beispielsweise in einem Kraftfahrzeug, beispielsweise in Form eines Personenkraftwagens (PKW), angeordnet sein kann.

Das Lade-System 1 weist einen optionalen elektrischen Speise-Energiespeicher 3 in Form einer Batterie auf, die eine Betriebsspannung von ca. 800 V ausgibt.

Das Lade-System 1 weist weiter eine Anzahl m von Anschlüssen 12_1, ...., 12_m zum Anschließen von zu ladenden elektrischen Bezugs-Energiespeichern 2 auf. Die elektrischen Bezugs-Energiespeicher 2 können beispielsweise Batterien von zumindest teilweise elektrisch angetriebenen Kraftfahrzeugen sein.

Ein oder mehrere Anschlüsse der Anzahl m von Anschlüssen 12_1, ...., 12_m kann/können auch mit einem elektrischen Versorgungsnetz 21 verbunden werden, wobei für diesen Fall elektrische Energie aus dem Speise-Energiespeicher 3 in das elektrische Versorgungsnetz 21 eingespeist werden kann oder umgekehrt elektrische Energie aus dem Versorgungsnetz 21 in den Speise-Energiespeicher 3 eingespeist werden.

Vorliegend sind exemplarisch zwei elektrische Bezugs-Energiespeicher 2 dargestellt, die mittels des Lade-Systems 1 gleichzeitig geladen werden können, wie nachfolgend noch näher beschrieben werden wird. Es versteht sich, dass je nach Dimensionierung des Lade-Systems 1 auch mehr als zwei elektrische Bezugs-Energiespeicher 2 gleichzeitig geladen werden können.

Beispielsweise kann das Lade-System 1 in einer ersten Dimensionierungsstufe exemplarisch m = 8 Anschlüsse 12 aufweisen, von denen jeweils 4 Anschlüsse zu einem Steckverbinder zusammengefasst sein können.

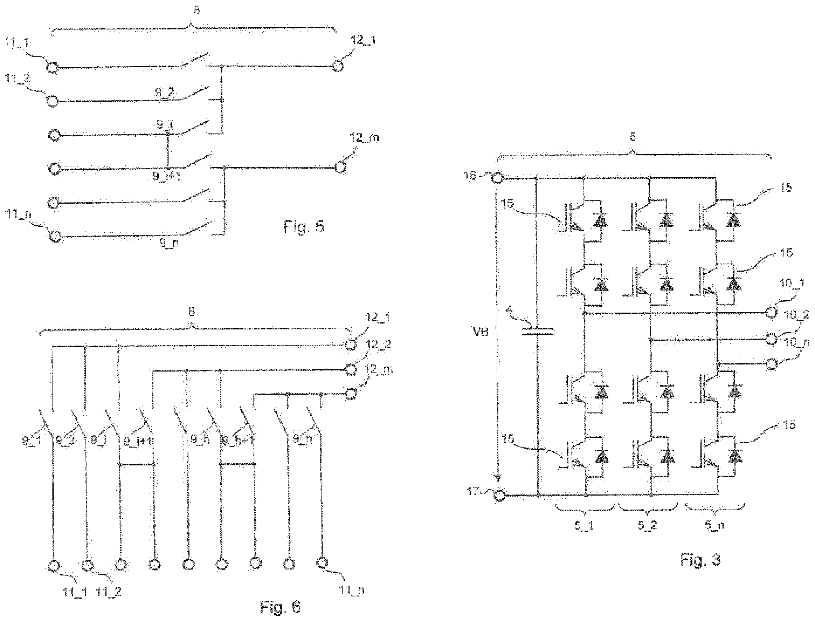

Das Lade-System 1 weist weiter eine Wechselrichtereinheit 5 auf, die bezugnehmend auf die Figuren 2 und 3 eine Anzahl n von mindestens drei Wechselrichter-Brücken 5_1, ..., 5_n aufweist. Die Anzahl n kann in den gezeigten Ausführungsformen beispielsweise 6 sein.

Bezugnehmend auf Fig. 2 weisen die Wechselrichter-Brücken 5_1, ..., 5_n jeweils zwei ansteuerbare Halbleiter-Schaltmittel 15 auf, die zwischen Pole 16 und 17 in Reihe geschaltet sind. Die Halbleiter-Schaltmittel 15 sind mittels Ansteuersignalen C1 bis Cp angesteuert, wobei die Ansteuersignale C1 bis Cp von einer Steuereinheit 20 erzeugt werden. Am Pol 16 liegt ein positives Zwischenkreispotential an und am Pol 17 liegt ein negatives Zwischenkreispotential an, wobei die Potentialdifferenz zwischen den beiden Polen 16, 17 eine Zwischenkreisspannung VB bildet, die mittels eines Zwischenkreiskondensators 4 gepuffert wird. Diese Zwischenkreisspannung VB ist diejenige Spannung, die von dem elektrischen Energiespeicher 3 bzw. der Batterie ausgegeben wird. Folglich sind die jeweiligen Wechselrichter-Brücken 5_1, ..., 5_n aus dem Speise-Energiespeicher 3 gespeist.

Alternativ oder zusätzlich zur Speisung der Wechselrichter-Brücken 5_1, ..., 5_n aus dem Speise-Energiespeicher 3 kann die Zwischenkreisspannung auch mittels eines nicht dargestellten elektrischen Generators erzeugt werden, der beispielsweise von einem Verbrennungsmotor eines Kraftfahrzeugs bzw. PKWs angetrieben werden kann.

Die Wechselrichter-Brücken 5_1, ..., 5_n weisen jeweils einen Mittenabgriff 10_1, ..., 10_n auf, der einem elektrischen Verbindungspunkt der jeweiligen Halbleiter-Schaltmittel 15 entspricht.

Die in Fig. 3 gezeigte Wechselrichtereinheit 5 weist Wechselrichter-Brücken 5_1, ..., 5_n mit jeweils vier ansteuerbaren Halbleiter-Schaltmitteln 15 auf, die zwischen die Pole 16 und 17 in Reihe geschaltet sind. Es versteht sich, dass eine jeweilige Wechselrichter-Brücke auch mehr als vier Halbleiter-Schaltmittel aufweisen kann.

Bezugnehmend auf Fig. 4 weist das Lade-System 1 weiter eine Filtereinheit 6 mit einer Anzahl n von elektrischen Filtern 6_1, ..., 6_n auf. Ein jeweiliges elektrisches Filter 6_1, ..., 6_n weist einen Eingang 13_1, ..., 13_n auf. Ein jeweiliger Eingang 13_1, ..., 13_n ist mit einem jeweils zugehörigen Mittenabgriff 10_1, ..., 10_n einer der Wechselrichter-Brücken 5_1, ..., 5_n elektrisch verbunden. D.h. der Eingang 13_1 ist mit dem Mittenabgriff 10_1 verbunden, der Eingang 13_2 ist mit dem Mittenabgriff 10_2 verbunden usw.

Ein jeweiliges Filter 6_1, ..., 6_n weist zwei Drosseln 7 und einen Kondensator 14 in PI-Topologie auf.

Bezug nehmend auf die Figuren 1, 5 und 6 weist das Lade-System 1 weiter eine steuerbare Zuordnungseinheit 8 auf, die zwischen die Ausgänge 11_1,..., 11_n der Filter 6_1, ..., 6_n und die Anschlüsse 12_1, ...., 12_m eingeschleift ist.

Die steuerbare Zuordnungseinheit 8 ist dazu ausgebildet, in Abhängigkeit von einer Anzahl k von Ansteuersignalen AS_1, ..., AS_k einen jeweiligen Ausgang 11_1, ..., 11_n eines Filters 6_1, ..., 6_n mit einem jeweils zugehörigen der Anschlüsse 12_1, ..., 12_m elektrisch zu verbinden, was nachfolgend noch näher erläutert werden wird. Die Anzahl k kann gleich der Anzahl n, oder gleich der Anzahl m oder verschieden von n und m sein.

Die Steuereinheit 20 des Lade-Systems 1 ist dazu ausgebildet, die Ansteuersignale AS_1, ..., AS_k in Abhängigkeit von einem gewünschten Lademodus des Lade-Systems 1 zu erzeugen.

Bezugnehmend auf die Figuren 5 und 6 weist die Zuordnungseinheit 8 eine Anzahl von ansteuerbaren Schaltmitteln 9 in Form von Schützen auf, die von der Steuereinheit 20 in Abhängigkeit von einem gewünschten Lademodus des Lade-Systems 1 angesteuert werden und einen Lademodus-abhängigen Schaltzustand aufweisen.

Der Schaltzustand der ansteuerbaren Schaltmittel 9 wird mittels der Ansteuersignale AS_1, ..., AS_k geeignet eingestellt. Die Anzahl k der Ansteuersignale AS_1, ..., AS_k kann identisch mit der Anzahl der Schaltmittel sein.

Mittels des Lade-Systems 1 können in einem ersten Lademodus beispielsweise zwei elektrische Bezugs-Energiespeicher 2 gleichzeitig mit Wechselstrom geladen werden. Hierbei können die elektrischen Bezugs-Energiespeicher 2 gleichzeitig dreiphasig geladen werden, gleichzeitig einphasig geladen werden oder gemischt einer der elektrischen Bezugs-Energiespeicher 2 dreiphasig und der andere der elektrischen Bezugs-Energiespeicher 2 einphasig geladen werden.

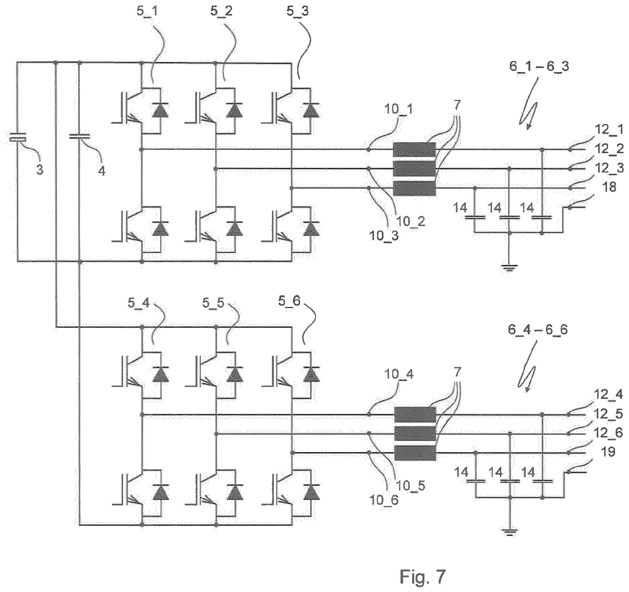

Fig. 7 zeigt das Lade-System 1 schematisch in dem ersten Lademodus bei entsprechendem Schaltzustand der Schaltmittel 9 der steuerbaren Zuordnungseinheit 8. Die Zuordnungseinheit und deren Schaltmittel 9 sind aus Gründen der besseren Übersichtlichkeit nicht dargestellt, sondern lediglich die sich ergebenden elektrischen Zuordnungen von Filterausgängen zu den Anschlüssen 12_1 bis 12_6. Die Filter 6_1 bis 6_6 weisen hier exemplarisch jeweils lediglich eine Drossel 7 auf.

Die Schaltzustände der Schaltmittel 9 der steuerbaren Zuordnungseinheit 8 sind derart gewählt, dass die Brückenzweige 5_1 bis 5_3 einen ersten dreiphasigen Wechselrichter bilden, der herkömmlich aus der vom elektrischen Speise-Energiespeicher 3 gelieferten Gleichspannung eine dreiphasige Ladewechselspannung erzeugt, die an den Anschlüssen 12_1 bis 12_3 ausgegeben wird und zum dreiphasigen Laden eines ersten elektrischen Bezugs-Energiespeichers 2 dienen kann. Weiter ist ein optionaler Anschluss 18 vorgesehen, der mit PE verbunden ist.

Die Schaltzustände der Schaltmittel 9 der steuerbaren Zuordnungseinheit 8 sind weiter derart gewählt, dass die Brückenzweige 5_4 bis 5_6 einen zweiten dreiphasigen Wechselrichter bilden, der herkömmlich aus der vom elektrischen Speise-Energiespeicher 3 gelieferten Gleichspannung eine dreiphasige Ladewechselspannung erzeugt, die an den Anschlüssen 12_4 bis 12_6 ausgegeben wird und zum dreiphasigen Laden eines zweiten elektrischen Bezugs-Energiespeichers 2 dienen kann. Weiter ist ein optionaler Anschluss 19 vorgesehen, der mit PE verbunden ist.

Die Anschlüsse 12_1, 12_2, 12_3 und 18 können in einen Steckverbinder integriert sein. Entsprechend können die Anschlüsse 12_4, 12_5, 12_6 und 19 in einen weiteren Steckverbinder integriert sein.

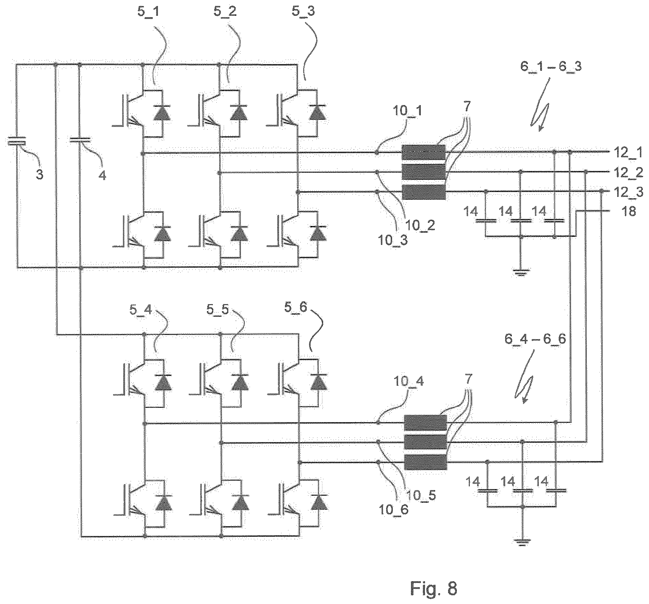

Fig. 8 zeigt das Lade-System 1 schematisch in einem zweiten Lademodus bei entsprechendem Schaltzustand der Schaltmittel 9 der steuerbaren Zuordnungseinheit 8. Die Zuordnungseinheit und deren Schaltmittel 9 sind aus Gründen der besseren Übersichtlichkeit nicht dargestellt, sondern lediglich die sich ergebenden elektrischen Zuordnungen von Filterausgängen zu den Anschlüssen 12_1 bis 12_3. Die Filter 6_1 bis 6_6 weisen hier exemplarisch jeweils lediglich eine Drossel 7 auf.

In dem zweiten Lademodus kann ein einzelner Bezugs-Energiespeicher 2 mit Wechselstrom geladen werden, wobei ein Ladestrom höher ist als ein Ladestrom im ersten Lademodus.

Im zweiten Lademodus sind jeweils zwei Brückenzweige über ein entsprechendes Filter auf einen gemeinsamen zugehörigen Anschluss geschaltet, d.h. parallel geschaltet, so dass bezogen auf den ersten Lademodus ein höherer Ladestrom ausgegeben werden kann. So sind die Brückenzweige 5_1 und 5_4 über deren Filter 6_1 bzw. 6_4 auf den Anschluss 12_1 geschaltet, die Brückenzweige 5_2 und 5_5 über deren Filter 6_2 bzw. 6_5 auf den Anschluss 12_2 geschaltet und die Brückenzweige 5_3 und 5_6 über deren Filter 6_3 bzw. 6_6 auf den Anschluss 12_3 geschaltet.

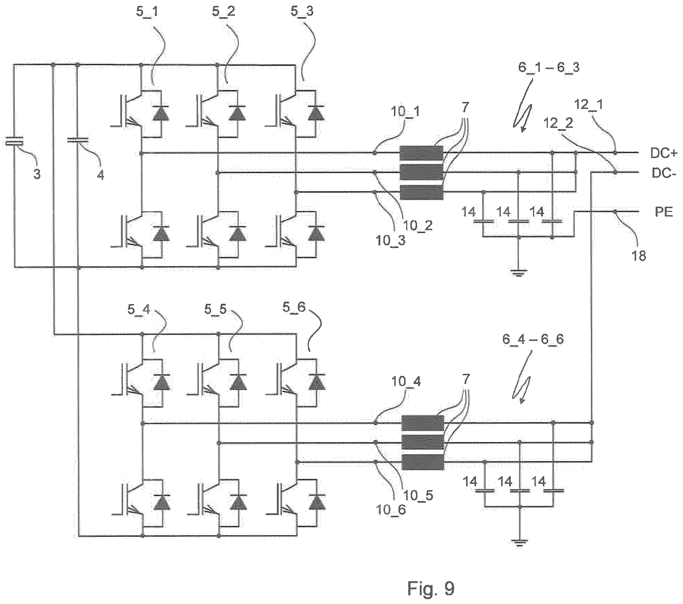

Fig. 9 zeigt das Lade-System 1 schematisch in einem dritten Lademodus bei entsprechendem Schaltzustand der Schaltmittel 9 der steuerbaren Zuordnungseinheit 8. Die Zuordnungseinheit und deren Schaltmittel 9 sind aus Gründen der besseren Übersichtlichkeit nicht dargestellt, sondern lediglich die sich ergebenden elektrischen Zuordnungen von Filterausgängen zu den Anschlüssen 12_1 und 12_2. Die Filter 6_1 bis 6_6 weisen hier exemplarisch jeweils lediglich eine Drossel 7 auf.

In dem dritten Lademodus kann ein einzelner Bezugs-Energiespeicher 2 mit Gleichstrom mit maximaler Ladeleistung geladen werden.

Im dritten Lademodus sind die oberen Halbleiter-Schaltmittel 15 der drei Brückenzweige 5_1, 5_2, 5_3 dauerhaft leitend und die unteren Halbleiter-Schaltmittel 15 der drei Brückenzweige 5_1, 5_2, 5_3 dauerhaft sperrend. Somit ist der Pol 16 bzw. das positive Zwischenkreispotential über die oberen Schaltmittel 15 der drei Brückenzweige 5_1, 5_2, 5_3 und die Drosseln 7 der Filter 6_1, 6_2 und 6_3 mit dem Anschluss 12_1 elektrisch verbunden.

Entsprechend sind die oberen Halbleiter-Schaltmittel 15 der drei Brückenzweige 5_4, 5_5, 5_6 dauerhaft sperrend und die unteren Halbleiter-Schaltmittel 15 der drei Brückenzweige 5_4, 5_5, 5_6 dauerhaft leitend. Somit ist der Pol 17 bzw. das negative Zwischenkreispotential über die unteren Schaltmittel 15 der drei Brückenzweige 5_4, 5_5, 5_6 und die Drosseln 7 der Filter 6_4, 6_5 und 6_6 mit dem Anschluss 12_2 elektrisch verbunden.

Wird der Leistungsfluss umgedreht, dann kann die Wechselrichtereinheit 5 auch zum Wiederaufladen des elektrischen Speise-Energiespeichers 3 verwendet werden. Hierzu kann die Steuereinheit 20 die Ansteuersignale AS_1, ..., AS_k für die steuerbare Zuordnungseinheit 8 und die weiteren Ansteuersignale C1, ..., Cp für die Halbleiter-Schaltmittel 15 derart erzeugen, dass der Speise-Energiespeicher 3 mittels elektrischer Energie, die an einem oder mehreren der Anschlüsse 12_1, ...., 12_m zur Verfügung gestellt ist, geladen wird.

Die Steuereinheit 20 kann dazu ausgebildet sein, sämtliche Ansteuersignale derart zu erzeugen, dass ein stromloses Schalten der Schaltmittel 9 der Zuordnungseinheit 8 ermöglicht wird, damit die Schaltmittel 9 klein hinsichtlich ihrer Schaltleistung dimensioniert werden können.

Weiter kann ein Überlastschutz der Schaltmittel 9 durch eine integrierte Strommessung in den Wechselrichterbrücken realisiert werden.

Die Steuereinheit 20 kann zur Kommunikation mit dem Speise-Energiespeicher 3 und allen angeschlossenen Bezugs-Energiespeichern 2 ausgebildet sein und die Wechselrichtereinheit 5 derart steuern, dass eine gewünschte Leistung (Spannung und Strom) bereit gestellt wird.

Erfindungsgemäß kann durch bedarfsgerechtes Parallelschalten von Brückenzweigen ein AC-Ladestrom erhöht werden, wodurch eine Schnellladung von elektrischen Fahrzeugenergiespeichern ermöglicht wird. Entsprechend kann durch das Parallelschalten von Brückenzweigen ein DC-Ladestrom erhöht werden.

Das erfindungsgemäße Lade-System ermöglicht weiter das Wiederaufladen des Speise-Energiespeichers 3 an einer herkömmlichen dreiphasigen Industriesteckdose.

**Patentansprüche**

1. Lade-System (1), aufweisend:

   - eine Anzahl m von Anschlüssen (12_1, ...., 12_m) zum Anschließen mindestens eines zu ladenden elektrischen Bezugs-Energiespeichers (2),
   - eine Anzahl n von mindestens drei Wechselrichter-Brücken (5_1, ..., 5_n), die jeweils einen Mittenabgriff (10_1, ..., 10_n) aufweisen, wobei Schaltmittel (15) der Wechselrichter-Brücken in Abhängigkeit von mindestens einem Ansteuersignal (C1, ..., Cp) schaltbar sind,
   - eine Anzahl n von elektrischen Filtern (6_1, ..., 6_n), wobei ein Eingang (13_1, ..., 13_n) eines jeweiligen Filters der Anzahl n von Filtern (6_1, ..., 6_n) mit einem jeweils zugehörigen Mittenabgriff (10_1, ..., 10_n) einer Wechselrichter-Brücke der Anzahl n von Wechselrichter-Brücken (5_1, ..., 5_n) elektrisch verbunden ist,
   - eine steuerbare Zuordnungseinheit (8), die zwischen einen jeweiligen Ausgang (11_1,..., 11_n) eines Filters der Anzahl n von Filtern (6_1, ..., 6_n) und die Anzahl m von Anschlüssen (12_1, ...., 12_m) eingeschleift ist und die dazu ausgebildet ist, in Abhängigkeit von mindestens einem weiteren Ansteuersignal (AS_1, ..., AS_k) einen jeweiligen Ausgang (11_1, ..., 11_n) eines Filters der Anzahl n von Filtern (6_1, ..., 6_n) mit einem jeweils zugehörigen Anschluss der Anzahl m von Anschlüssen (12_1, ...., 12_m) elektrisch zu verbinden, und
   - eine Steuereinheit (20), die dazu ausgebildet ist, die Ansteuersignale (AS_1, ..., AS_k, C1, ..., Cp) in Abhängigkeit von einem gewünschten Lademodus des Lade-Systems (1) zu erzeugen,
   - wobei der gewünschte Lademodus ausgewählt ist aus der Menge von Lademodi:

   a) gleichzeitiges Laden von mehreren elektrischen Bezugs-Energiespeichern (2) mit Wechselstrom,
   b) Laden mindestens eines Bezugs-Energiespeichers (2) mit Wechselstrom, wobei ein Ladestrom im Lademodus b) höher ist als ein Ladestrom im Lademodus a),
   c) gleichzeitiges Laden von mehreren elektrischen Bezugs-Energiespeichern (2) mit Gleichstrom,
   d) Laden mindestens eines elektrischen Bezugs-Energiespeichers (2) mit Gleichstrom, wobei ein Ladestrom im Lademodus d) höher ist als ein Ladestrom im Lademodus c).

2. Lade-System (1) nach Anspruch 1, **dadurch gekennzeichnet, dass**

   - das Lade-System (1) einen Speise-Energiespeicher (3) aufweist, der dazu ausgebildet ist, die Anzahl n von Wechselrichter-Brücken (5_1, ..., 5_n) elektrisch zu speisen.

3. Lade-System (1) nach Anspruch 1 oder 2, **dadurch gekennzeichnet, dass**

   - ein jeweiliges Filter der Anzahl n von Filtern (6_1, ..., 6_n) mindestens eine Drossel (7) und einen Kondensator (14) aufweist.

4. Lade-System (1) nach Anspruch 2 oder 3, **dadurch gekennzeichnet, dass**

   - die Steuereinheit (20) dazu ausgebildet ist, die Ansteuersignale (AS_1, ..., AS_k, C1, ..., Cp) derart zu erzeugen, dass der Speise-Energiespeicher (3) mittels elektrischer Energie, die an einem Anschluss oder mehreren Anschlüssen der Anzahl m von Anschlüssen (12_1, ...., 12_m) zur Verfügung gestellt ist, geladen wird.

5. Lade-System (1) nach einem der Ansprüche 2 bis 4, **dadurch gekennzeichnet, dass**

- die Steuereinheit (20) dazu ausgebildet ist, die Ansteuersignale (AS_1, ..., AS_k, C1, ..., Cp) derart zu erzeugen, dass im Speise-Energiespeicher (3) gespeicherte elektrische Energie in ein elektrisches Versorgungsnetz (21), das an einem Anschluss oder mehreren Anschlüssen der Anzahl m von Anschlüssen (12_1, ...., 12_m) angeschlossen ist, eingespeist wird.

6. Lade-System (1) nach einem der Ansprüche 2 bis 5, **dadurch gekennzeichnet, dass**

   - der Speise-Energiespeicher (3) eine Spannung mit einem Pegel liefert, der größer als ein Pegel einer Spannung ist, die ein Lade-Energiespeicher (2) ausgibt.

7. Lade-System (1) nach einem der vorhergehenden Ansprüche, **dadurch gekennzeichnet, dass**

   - die Zuordnungseinheit (8) eine Anzahl von ansteuerbaren Schaltmitteln (9) aufweist.

8. Lade-System (1) nach Anspruch 7, **dadurch gekennzeichnet, dass**

   - die ansteuerbaren Schaltmitteln (9) Schütze sind.

**Claims**

1. Charging system (1), comprising:

   - a number m of connections (12_1, ..., 12_m) for connecting at least one electric acquisition energy accumulator (2) to be charged,
   - a number n of at least three inverter bridges (5_1, ..., 5_n), each of which comprises a centre tap (10_1, ..., 10_n), wherein switching means (15) of the inverter bridges can be switched depending upon at least one actuation signal (C1, ..., Cp),
   - a number n of electrical filters (6_1, ..., 6_n), wherein an input (13_1, ..., 13_n) of a respective filter of the number n of filters (6_1, ..., 6_n) is electrically connected to a respectively associated centre tap (10_1, ..., 10_n) of an inverter bridge of the number n of inverter bridges (5_1, ..., 5_n),
   - a controllable assigning unit (8), which is connected between a respective output (11_1, ..., 11_n) of a filter of the number n of filters (6_1, ..., 6_n) and the number m of connections (12_1, ..., 12_m) and is designed, depending upon at least one further actuation signal (AS_1, ..., AS_k), to electrically connect a respective output (11_1, ..., 11_n) of a filter of the number n of filters (6_1, ..., 6_n) to a respectively associated connection of the number m of connections (12_1, ..., 12_m), and
   - a control unit (20), which is designed to generate the actuation signals (AS_1, ..., AS_k, C1, ..., Cp), depending upon a desired charging mode of the charging system (1),
   - wherein the desired charging mode is selected from the following series of charging modes:

     a) simultaneous charging of a plurality of electric acquisition energy accumulators (2) with alternating current,
     b) charging of at least one acquisition energy accumulator (2) with alternating current, wherein a charging current in charging mode b) is higher than a charging current in charging mode a),
     c) simultaneous charging of a plurality of electric acquisition energy accumulators (2) with direct current,
     d) charging of at least one electric acquisition energy accumulator (2) with direct current, wherein a charging current in charging mode d) is higher than a charging current in charging mode c).

2. Charging system (1) according to Claim 1, **characterized in that**

   - the charging system (1) comprises an energy supply accumulator (3) which is designed to electrically supply the number n of inverter bridges (5_1, ..., 5_n).

3. Charging system (1) according to Claim 1 or 2, **characterized in that**

   - a respective filter of the number n of filters (6_1, ..., 6_n) comprises at least one reactance coil (7) and a capacitor (14).

4. Charging system (1) according to Claim 2 or 3, **characterized in that**

   - the control unit (20) is designed to generate the actuation signals (AS_1, ..., AS_k, C1, ..., Cp) such that the energy supply accumulator (3) is charged by means of electrical energy which is made available on one connection or a plurality of connections of the number m of connections (12_1, ..., 12_m).

5. Charging system (1) according to one of Claims 2 to 4, **characterized in that**

   - the control unit (20) is designed to generate the actuation signals (AS_1, ..., AS_k, C1, ...,

Cp) such that electrical energy which is stored in the energy supply accumulator (3) is injected into an electricity supply grid (21), which is connected to one connection or a plurality of connections of the number m of connections (12_1, ..., 12_m) .

6. Charging system (1) according to one of Claims 2 to 5, **characterized in that**

   - the energy supply accumulator (3) supplies a voltage at a level which is higher than a level of a voltage which is delivered by a charging energy accumulator (2).

7. Charging system (1) according to one of the preceding claims, **characterized in that**

   - the assigning unit (8) comprises a number of actuatable switching means (9).

8. Charging system (1) according to Claim 7, **characterized in that**

   - the actuatable switching means (9) are contactors.

**Revendications**

1. Système de charge (1), comprenant :

   - un nombre m de bornes (12 1, ..., 12_m) destinées à raccorder au moins un accumulateur d'énergie de l'acquisition (2) électrique à charger,
   - un nombre n d'au moins trois ponts onduleurs (5_1, ..., 5_n), qui possèdent respectivement une prise centrale (10_1, ..., 10_n), des moyens de commutation (15) des ponts onduleurs pouvant être commutés en fonction d'au moins un signal d'excitation (C1, ..., Cp),
   - un nombre n de filtres électriques (6_1, ..., 6_n), une entrée (13_1, ..., 13_n) d'un filtre respectif des n filtres électriques (6_1, ..., 6_n) étant reliée électriquement à une prise centrale (10_1, ..., 10_n) respectivement associée d'un pont onduleur du nombre n de ponts onduleurs (5_1, ..., 5_n),
   - une unité d'affectation (8) commandable, qui est incorporée entre une sortie (11_1, ..., 11_n) respective d'un filtre du nombre n de filtres (6_1, ..., 6_n) et le nombre m de bornes (12_1, ..., 12_m) et qui est configurée pour, en fonction d'au moins un signal d'excitation supplémentaire (AS_1, ..., AS_k), relier électriquement une sortie (11_1, ..., 11_n) respective d'un filtre du nombre n de filtres (6_1, ..., 6_n) à une borne respectivement associée du nombre m de bornes (12_1, ..., 12_m), et
   - une unité de commande (20), qui est configurée pour générer les signaux d'excitation (AS_1, ..., AS_k, C1, ..., Cp) en fonction d'un mode de charge souhaité du système de charge (1),
   - le mode de charge souhaité étant sélectionné de l'ensemble de modes de charge :

      a) charge simultanée de plusieurs accumulateurs d'énergie de l'acquisition (2) électriques avec du courant alternatif,
      b) charge d'au moins un accumulateur d'énergie de l'acquisition (2) avec du courant alternatif, un courant de charge dans le mode de charge b) étant supérieur à un courant de charge dans le mode de charge a),
      c) charge simultanée de plusieurs accumulateurs d'énergie de l'acquisition (2) électriques avec du courant continu,
      d) charge d'au moins un accumulateur d'énergie de l'acquisition (2) avec du courant continu, un courant de charge dans le mode de charge C) étant supérieur à un courant de charge dans le mode de charge d).

2. Système de charge (1) selon la revendication 1, **caractérisé en ce que**

   - le système de charge (1) possède un accumulateur d'énergie d'alimentation (3) qui est configuré pour alimenter électriquement le nombre n de ponts onduleurs (5_1, ..., 5_n) .

3. Système de charge (1) selon la revendication 1 ou 2, **caractérisé en ce que**

   - un filtre respectif du nombre n de filtres (6_1, ..., 6_n) possède au moins une bobine (7) et un condensateur (14) .

4. Système de charge (1) selon la revendication 2 ou 3, **caractérisé en ce que**

   - l'unité de commande (20) est configurée pour générer les signaux d'excitation (AS_1, ..., AS_k, C1, ..., Cp) de telle sorte que l'accumulateur d'énergie d'alimentation (3) est chargé au moyen de l'énergie électrique qui est mise à disposition au niveau d'une borne ou de plusieurs bornes du nombre m de bornes (12_1, ..., 12 m) .

5. Système de charge (1) selon l'une des revendications 2 à 4, **caractérisé en ce que**

- l'unité de commande (20) est configurée pour générer les signaux d'excitation (AS_1, ..., AS_k, C1, ..., Cp) de telle sorte que l'énergie électrique stockée dans l'accumulateur d'énergie d'alimentation (3) est injectée dans le réseau de distribution électrique (21) qui est raccordé à une borne ou plusieurs bornes du nombre m de bornes (12_1, ..., 12_m) .

6. Système de charge (1) selon l'une des revendications 2 à 5, **caractérisé en ce que**

- l'accumulateur d'énergie d'alimentation (3) délivre une tension ayant un niveau qui est plus élevé qu'un niveau d'une tension que délivre un accumulateur d'énergie de charge (2).

7. Système de charge (1) selon l'une des revendications précédentes, **caractérisé en ce que**

- l'unité d'affectation (8) possède un certain nombre de moyens de commutation (9) commandables.

8. Système de charge (1) selon la revendication 7, **caractérisé en ce que**

- les moyens de commutation (9) commandables sont des contacteurs

Fig. 1

Fig. 2

Fig. 4

Fig. 3

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016209905 A1